Europäisches Patentamt

European Patent Office

Office européen des brevets

(19)

(11) Veröffentlichungsnummer: **0 293 897 B1**

(12) **EUROPÄISCHE PATENTSCHRIFT**

(45) Veröffentlichungstag der Patentschrift:
17.04.91 Patentblatt 91/16

(51) Int. Cl.$^5$: **F16H 9/18, F16C 31/04**

(21) Anmeldenummer: **88108868.6**

(22) Anmeldetag: **03.06.88**

(54) Lageranordnung für stufenlos regelbare Kegelscheiben Umschlingungsgetriebe.

(30) Priorität: 04.06.87 DE 3718682

(43) Veröffentlichungstag der Anmeldung:
07.12.88 Patentblatt 88/49

(45) Bekanntmachung des Hinweises auf die
Patenterteilung:
17.04.91 Patentblatt 91/16

(84) Benannte Vertragsstaaten:
DE ES FR GB IT SE

(56) Entgegenhaltungen:
EP-A- 0 004 130
FR-A- 2 476 251
GB-A- 2 034 421
US-A- 3 397 932
A. PALMGREN: "Ball and Roller Bearing",
1945, SKF Industries, Inc., Philadelphia, US

(73) Patentinhaber: FORD-WERKE
AKTIENGESELLSCHAFT
Werk Köln-Niehl Henry-Ford-Strasse Postfach
60 40 02
W-5000 Köln 60 (DE)
DE IT SE
Patentinhaber: FORD MOTOR COMPANY
LIMITED
Eagle Way
Brentwood Essex CM13 3BW (GB)
GB
Patentinhaber: FORD FRANCE SOCIETE
ANONYME
344 Avenue Napoléon Bonaparte B.P. 307
F-92506 Rueil Malmaison Cedex (FR)
FR
Patentinhaber: Ford Motor Company
One Parklane Boulevard Parklane Towers
East
Dearborn Michigan 48126 (US)
ES

(72) Erfinder: Fuss, Josef
Herderstrasse 9
W-5013 Eldsdorf (DE)

(74) Vertreter: Messulam, Alec Moses et al
A. Messulam & Co. 24 Broadway
Leigh on Sea Essex SS9 1BN (GB)

## Beschreibung

Die Erfindung bezieht sich auf eine Lageranordnung für stufenlos regelbare Kegelscheiben-Umschlingungsgetriebe der im Oberbegriff des Patentanspruches 1 erläuterten Art, wie sie z.B aus der GB-A-2034 421 bekannt ist.

Aus den DE-PS 18 05 102 und 27 34 630 sind weiterhin Anordnungen für stufenlos regelbare Kegelscheiben-Umschlingungsgetriebe in einer Doppelbauform bekannt, bei der für die mittig angeordneten Kegelscheiben Axial-Linear-Führungen vorgesehen sind, mit denen sie sich gegenüber ihrer Primär- bzw. Sekundärwelle entsprechend dem Schräglauf des Umschlingungsbandes einstellen können.

Die Erfindung bezieht sich auf Kegelscheiben-Umschlingungsgetriebe in Einfachbauform, bei der durch die axiale Verstellung der Kegelscheiben zur Übersetzungsregelung jeweils ein Schräglauf des Umschlingungsbandes auftritt, der mehr oder weniger zu technischen Problemen führt.

Bei Umschlingungsgetrieben mit Kegelscheiben und stufenloser Übersetzungsregelung ergibt sich beim konstruktiv gegebenen konstanten Achsabstand zwischen Primärwelle und Sekundärwelle und bei einer konstanten Länge des Umschlingungsbandes, das sich bei einer Übersetzungsänderung die Radien ($r_1$ und $r_2$) nicht um den gleichen Betrag ändern ($\Delta r_1$ ist ungleich $\Delta r_2$). Bedingt durch die Neigung der Kegelflächen ergibt sich somit auch eine unterschiedliche axiale Verschiebung ($\Delta s1$ ist ungleich $\Delta s2$), was zu einem Schräglaufen des Umschlingungsbandes führt. Diesen Effekt beschreibt man als geometrischen Fehler. Dieser geometrische Fehler wird durch die Toleranzen der Bauteile, d.h., die montierte Lage der Festkegelscheiben innerhalb des Getriebegehäuses noch größer.

In der Praxis stellt sich also ein Schräglauf des Umschlingungsbandes ein, der sich aus den Toleranzen der Getriebebauteile und dem oben erwähnten geometrischen Fehler zusammensetzt. Dieser Schräglauf beansprucht das Umschlingungsband zusätzlich, insbesondere wenn es sich um ein sogenanntes Schubgliederband handelt, und erzeugt zusätzliche Reibung, die den Wirkungsgrad des Getriebes verschlechtert sowie unerwünschte Geräusche verursacht.

Die Aufgabe der Erfindung ist es eine Lageranordnung für stufenlos regelbare Kegelscheiben-Umschlingungsgetriebe der im Oberbegriff des Patentanspruches 1 erläuterten Art derart auszubilden, daß der Schräglauf des Umschlingungsbandes sich selbsttätig auf ein Minimum einstellen kann. Gemäß der Erfindung wird diese Aufgabe gelöst, indem eine Lageranordnung gemäß dem Oberbegriff des Patentanspruches 1 die im Kennzeichenteil des Patentanspruches 1 aufgezeigten Merkmale aufweist.

Aus der FR-A-2 476 251 und der US-A-3 397 932 sind an sich Lageranordnungen bekannt, bei denen zusätzlich zu der die radialen Kräfte übertragenden, in einer Lagerebene angeordneten Wälzlager sich quer hierzu erstreckende Axial-Linear-Führungen in Wälzlagerbauart vorgesehen sind, um axiale Ausgleichbewegungen an den gelagerten Bauteilen zu ermöglichen.

In den Ansprüchen 2 und 3 sind weitere Einzelheiten der Erfindung näher erläutert.

Dadurch, daß das Festlager an der Primärwelle mit einem Außenring über eine Axial-Linear-Führung leicht verschiebbar im Getriebegehäuse angeordnet ist, ist es möglich, den Schräglauf des Umschlingungsbandes so lange zu korrigieren, bis die Axialkraftkomponente Fa der Bandzugkraft größer ist als die Reibkraft Fr in der Axial-Linear-Führung. Dadurch kann der Schräglauf des Umschlingungsbandes im Bereich Fa > Fr erheblich reduziert werden, solange keine weiteren Kräfte auf das System wirken.

Durch die in den Ansprüchen 2 und 3 erläuterten Einzelheiten wird sichergestellt, daß die Axial-Linear-Führung wirklich nur als Linearführung arbeitet und keine zusätzlichen Momente oder Kräfte übertragen oder abstützen muß und sie auf einfache Weise im Getriebegehäuse angeordnet und montiert werden kann.

Die Erfindung wird anhand eines in den beiliegenden Zeichnungen gezeigten Ausführungsbeispieles näher erläutert. Es zeigt :

Fig. 1 einen Längsschnitt durch ein Kegelscheiben-Umschlingungsgetriebes bei dem die erfindungsgemäße Lageranordnung an dem durch Strich-Punkt-Linien hervorgehobenen Festlager der Primärwelle angewendet werden kann ;

Fig. 2 eine Ansicht in Richtung des Pfeiles A auf die erfindungsgemäße Lageranordnung ;

Fig. 3 einen Schnitt entlang der Linie III-III in Fig. 2 und

Fig. 4 ein Diagramm über die bei der erfindungsgemäßen Lageranordnung auftretenden Bewegungsverhältnisse, d.h., der sich einstellende Schräglauf des Unschlingungsbandes in Abhängigkeit von der Übersetzung.

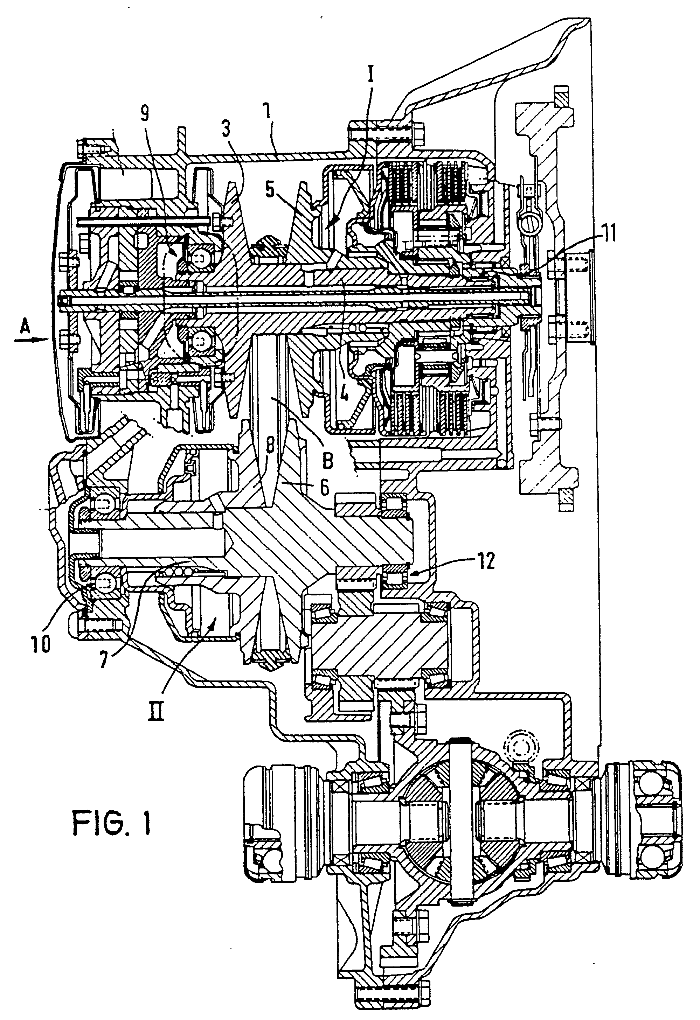

Das in Fig. 1 gezeigte stufenlos regelbare Kegelscheiben-Umschlingungsgetriebe besteht im wesentlichen aus einem Getriebegehäuse 1, in dem auf einer Primärwelle I drehfest angeordnete Kegelscheibenanordnungen über ein Umschlingungsband B treibend mit einer auf einer Sekundärwelle II drehfest angeordneten Kegelscheibenanordnung treibend verbunden sind. Die Primärwelle I besteht hierbei im wesentlichen aus einer axial feststehenden mit einem Wellenansatz die Primärwelle bildenden Festkegelscheibe 3 und einer auf deren Wellenansatz 4 axial verschiebbaren Stellkegelscheibe 5, die über nicht näher bezeichnete Servoeinrichtungen in ihrer Axiallage veränderbar ist.

Die Sekundärwelle II besteht in ähnlicher Weise aus einer axial feststehenden mit einem Wellenansatz die Sekundärwelle bildenden Festkegelscheibe 6, auf deren Wellenansatz 7 eine axial verschiebbare Stellkegelscheibe 8 angeordnet ist, auf die gleichfalls eine nicht näher erläuterte Servoeinrichtung einwirkt.

Sowohl die Primärwelle I als auch die Sekundärwelle II sind im Getriebegehäuse 1 über ein Festlager 9 bzw. 10 in Form eines Rillenkugellagers und einem Loslager 11 bzw. 12 in Form eines Nadellagers oder Rollenlagers drehbar gelagert.

Die Erfindung bezieht sich auf die Lageranordnung für das Festlager 9 der Primärwelle I.

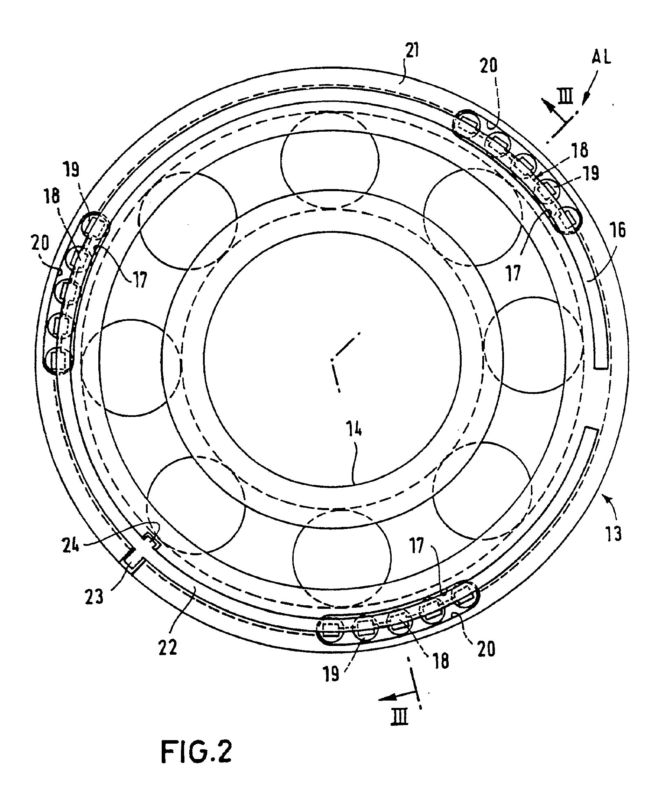

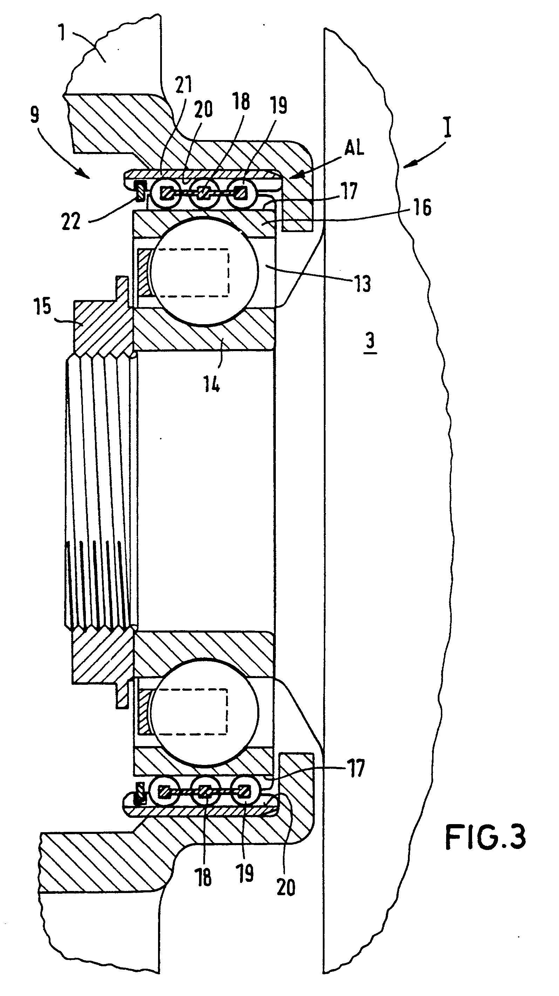

Wie insbesondere aus den Figuren 2 und 3 zu ersehen ist, besteht das die Festkegelscheibe 3 im Getriebegehäuse 1 abstützende Festlager 9 aus einem modifizierten Rillenkugellager 13, dessen Innenring 14 in üblicher Weise über eine Befestigungsmutter 15 am Wellenzapfen der Festkegelscheibe 3 festgelegt ist. Der Außenring 16 des Rillenkugellagers 13 ist dadurch modifiziert, daß er an um 120° versetzten Bereichen mit sich axial erstreckenden Lauftaschen 17 von einer solchen Umfangserstreckung versehen ist, daß ein flächiger Kugelkäfig 18 mit einer Vielzahl von axial hintereinander und in Umfangsrichtung verteilt angeordneten Kugeln 19 angeordnet werden kann, die sich nach außen in entsprechenden Lauftaschen 20 eines Außenringes 21 der Axial-Linear-Führung AL abstützen.

Damit die erfindungsgemäße Axial-Linear-Führung AL am Festlager 9 auch wirklich nur als Linearführung wirkt und keine zusätzlichen Momente oder Kräfte übertragen oder abstützen muß, ist zwischen dem Außenring 16 des Rillenkugellagers 13 und dem Außenring 21 der Axial-Linear-Führung ein Formsprengring 22 vorgesehen, der über eine radiale Außennase 23, die im Außenring 21 festgelegt ist, und eine radiale Innennase 24, die in den Außenring 16 des Rillenkugellagers 13 eingreift, diesen gegenüber dem im Getriebegehäuse 1 eingepreßten Außenring 21 der Axial-Linear-Führung, gegen radiales Verdrehen sichert, also das Moment abstützt. Des weiteren sichert der Formsprengring 22 die Käfig-Kugelanordnung 18/19 gegen einen unbeabsichtigtes Herauslaufen aus den Lauftaschen 17 und 20. Er dient weiterhin als mechanischer Anschlag und bestimmt mit der Lagerschulter im Gehäuse den Funktionsbereich der Lageranordnung.

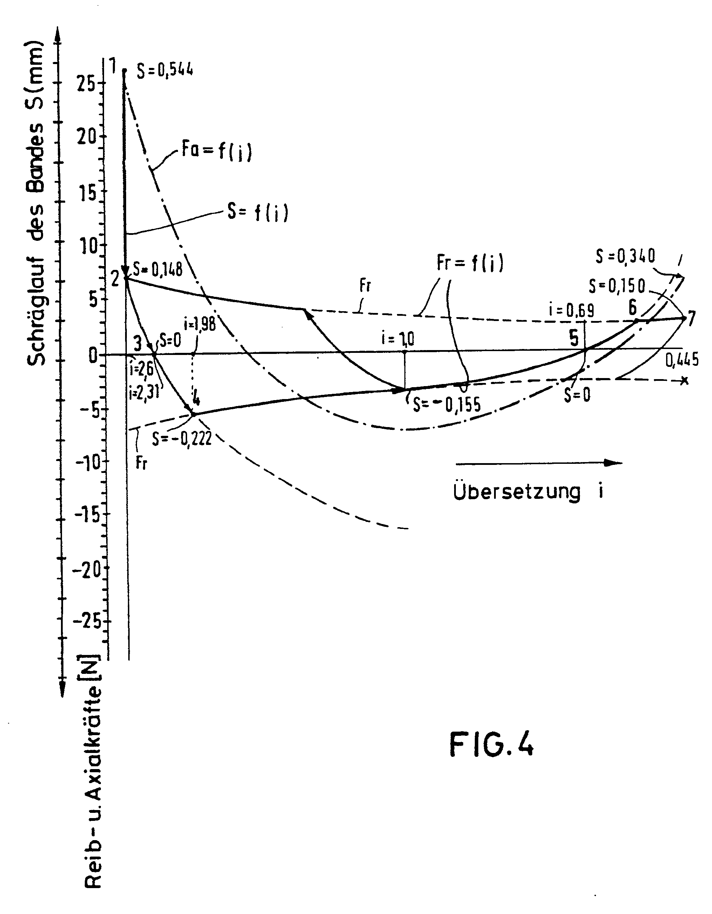

Aus Fig. 4 sind die sich bei einer Übersetzungsregelung von der niedrigsten Untersetzung zur höchsten Übersetzung ergebenden Kraftkomponenten Fa (Strich-Punkt-Linie) am Umschlingungsband und Fr (gestrichelte Linie) an der Lageranordnung zu entnehmen. Der axiale Anteil der Bandzugkraft Fa und die Reibkraft Fr in der Axial-Linear-Führung wirken wie folgt auf den Schräglauf des Bandes "S" ein.

Wie aus dem Kurvenverlauf von 1 nach 2 zu ersehen ist, ergibt sich durch die bei der niedrigen Untersetzung von i = 2,6 wesentlich höheren Bandzugkraft Fa als der Reibkraft Fr bereits eine Verbesserung des Schräglaufes S des Bandes von 0,544 mm auf 0,148 mm, was einer Verbesserung von beachtlichen 0,396 mm entspricht. Wie sich aus Punkt 3 ergibt, wird der Schräglauf S gleich 0 viel eher als bisher erreicht, was sich besonders günstig auswirkt, da in diesem Bereich eine hohe Belastung vorliegt. Bei der weiteren Regelung 3 nach 4 steigt der Schräglauf S wieder leicht an. Im Bereich von 4 nach 5 nimmt der Schräglauf S bis auf 0 ab, wobei der Null-Durchgang wieder früher als bisher erreicht wird. Im Bereich von 5 nach 7 nimmt der Schräglauf S wieder zu, bleibt jedoch mit 0,19 mm geringer als bisher.

Bei einer entsprechend umgekehrten Übersetzungsregelung von der höchsten Übersetzung zur niedrigsten Untersetzung verläuft der Ausgleich des Schräglaufes S in sinngemäßer Weise, jedoch nur bis zum Punkt 2.

Durch die gemäß der erfindungsgemäßen Lageranordnung selbsttätig erfolgenden teilweise Kompensation des Schräglaufes des Umschlingungsbandes werden insbesondere für Schubgliederbänder folgende wesentliche Vorteile erreicht: die Bänder werden nicht so hoch beansprucht, da die einzelnen Glieder beim Ein- und Auslauf zwischen den Kegelscheiben nicht zu stark verspannt und entspannt werden, wodurch bisher aufgetretene Geräusche vermieden werden. Dadurch, daß sich die einzelnen Glieder nicht mehr so stark bei Ein- und Auslauf zwischen den Kegelscheiben ausrichten müssen, wird durch die verringerte Reibung ein besserer Wirkungsgrad erzielt.

## Ansprüche

1. Lageranordnung für stufenlos regelbare Kegelscheiben-Umschlingungsgetriebe mit auf einer Primärwelle drehfest angeordneten Kegelscheiben, einer axial feststehenden, mit einem Wellenansatz die Primärwelle bildenden Festkegelscheibe und einer auf deren Wellenansatz axial verschiebbaren Stellkegelscheibe, die über ein Umschlingungsband mit auf einer Sekundärwelle drehfest angeordneten Kegelscheibe, einer mit einem Wellenansatz die Sekundärwelle bildenden Festkegelscheibe und einer auf deren Wellenansatz axial verschiebbaren Stellkegelscheibe, treibend verbunden sind, **dadurch gekennzeichnet**, daß das Festlager (9) der Primärwelle (I) mit seinem Aussenring (16) über eine Axial-Linear-Führung (AL) leicht und begrenzt verschiebbar im Getriebegehäuse (1) angeordnet ist.

2. Lageranordnung nach Anspruch 1, **dadurch gekennzeichnet**, daß die Axial-Linear-Führung (AL) des Festlagers (9) aus dem Außenring (16) des Rillenkugellagers (13) um 120° versetzt angeordneten Lauftaschen (17) mit darin angeordneten flächigen Kugelkäfig/Kugelanordnungen (18/19) und entsprechenden Lauftaschen (20) in einem Außenring (21) der Axial-Linear-Führung (AL) besteht.

3. Lageranordnung nach den Ansprüchen 1 und 2, **dadurch gekennzeichnet**, daß die Axial-Linear-Führung (AL) in Form der flächigen Kugelkäfig/Kugelanordnung (18/19) von Momentbelastungen freigehalten ist, indem ein mit einer äußeren radialen Nase (23) im Außenring (21) der Axial-Linear-Führung (AL) festgelegter Formsprengring (22) mit einer inneren radialen Nase (24) den Außenring (16) des Rillenkugellagers (13) gegen Drehung abstützt.

## Claims

1. A bearing arrangement for continuously variable cone-pulley belt-drive transmissions with cone pulleys disposed rotationally rigidly on a primary shaft, a fixed cone pulley which is axially immovable and forms the primary shaft with a shaft attachment, and an adjusting cone pulley which is axially displaceable on the shaft attachment of the fixed cone pulley and which is connected in a driving manner by way of a driving belt to cone pulleys mounted rotationally rigidly on a secondary shaft, a fixed cone pulley forming the secondary shaft with a shaft attachment, and an adjusting cone pulley axially displaceable on the shaft attachment of the fixed cone pulley, the primary and secondary shafts being mounted in the gearbox casing by way of a fixed bearing and a loose bearing, characterized in that the fixed bearing (9) of the primary shaft (I) is arranged with its outer race (16) easily displaceable to a limited extent in the gearbox casing (1) by way of an axial-linear guide (AL).

2. A bearing arrangement according to Claim 1, characterized in that the axial-linear guide (AL) of the fixed bearing (9) comprises the outer race (16) of the deep-groove ball bearing (13), running recesses (17) disposed offset by 120° with plane ball-cage/ball arrangements (18/19) disposed therein, and corresponding running recesses (20) in an outer race (21) of the axial-linear guide (AL).

3. A bearing arrangement according to Claims 1 and 2, characterized in that the axial-linear guide (AL) in the form of the plane ball-cage/ball arrangement (18/19) is kept free from moment loading, in that a moulded circlip (22) which is fixed by an outer radial lug (23) in the outer race (21) of the axial-linear guide (AL) prevents the outer race (16) of the deep-groove ball bearing (13) from rotating by an inner radial lug (24).

## Revendications

1. Dispositif de portée pour transmissions par disques coniques à enlacement, réglables en continu, présentant des disques coniques assujettis en rotation à un arbre primaire, un disque conique fixe arrêté axialement et formant l'arbre primaire par un bout d'arbre, et un disque conique réglable pouvant coulisser axialement sur le bout d'arbre du disque précité, ces disques étant en liaison d'entraînement, par l'intermédiaire d'une courroie à enlacement, avec un disque conique assujetti en rotation à un arbre secondaire, un disque conique fixe formant l'arbre secondaire par un bout d'arbre, et un disque conique réglable pouvant coulisser axialement sur le bout d'arbre dudit disque, les arbres primaire et secondaire étant montés, dans le carter de la transmission, par l'intermédiaire d'un palier fixe et d'un palier libre, caractérisé par le fait que le palier fixe (9) de l'arbre primaire (I) est disposé dans le carter (1) de la transmission avec faculté de coulissement faible et limité, par sa bague externe (16), par l'intermédiaire d'un guidage linéaire axial (AL).

2. Dispositif de portée selon la revendication 1, caractérisé par le fait que le guidage linéaire axial (AL) du palier fixe (9) se compose de la bague externe (16) du roulement à billes rainuré (13), de logements de roulement (17) agencés avec décalage de 120° et renfermant des ensembles aplatis (18/19) à cages à billes/billes, et de logements de roulement correspondants (20) dans une bague externe (21) dudit guidage linéaire axial (AL).

3. Dispositif de portée selon les revendications 1 et 2, caractérisé par le fait que le guidage linéaire axial (AL), revêtant la forme de l'ensemble aplati (18/19) à cages à billes/billes, est maintenu exempt de contraintes imposées par des couples du fait qu'une bague moulée à déclic (22), arrêtée par un mentonnet radial externe (23) dans la bague externe (21) dudit guidage linéaire axial (AL), assure l'appui non rotatif, par un mentonnet radial interne (24), de la bague externe (16) du roulement à billes rainuré (13).

FIG. 1

FIG.2

FIG.3

FIG.4